# EUROPÄISCHE PATENTSCHRIFT

(11) **EP 0 790 454 B1**
(45) Veröffentlichungstag und Bekanntmachung des Hinweises auf die Patenterteilung: **29.11.2000**
(21) Anmeldenummer: 97101848.6
(22) Anmeldetag: 06.02.1997
(51) Int. Cl.: F16L 5/02, H02G 3/08

(54) **Dichtpackung zum Einsetzen in eine Maueröffnung zwecks Hindurchführens von Leitungen**
Stuffing-box for inserting into a wall opening serving as a leadthrough for conduits
Presse-étoupe pour l'insertion dans une ouverture d'un mur servant pour la traversée de conduites

(30) Priorität: 19.02.1996 DE 19606036; 14.11.1996 DE 19647061
(43) Veröffentlichungstag der Anmeldung: 20.08.1997
(73) Patentinhaber: Hauff-Technik GmbH & Co. KG, 89542 Herbrechtingen (DE)
(72) Erfinder: Herbst, Reiner, 89551 Königsbronn-Zang (DE); Oehrle, Achim, 89431 Bächingen (DE); Menge, Gerd-Joachim, 89542 Herbrechtingen (DE)
(74) Vertreter: Dr. Weitzel & Partner

(56) Entgegenhaltungen:
- DE-A- 19 526 927
- DE-U- 9 405 726

## Beschreibung

Die Erfindung betrifft eine Dichtpackung zum Einsetzen in eine Maueröffnung gemäß dem Oberbegriff des Anspruchs 1. Eine solche Dichtpackung ist durch DE 94 05 726 U bekannt.

Derartige Dichtpackungen umfassen als wesentliches Element ein Rohr, das an wenigstens einem Ende einen Flansch trägt. Das Rohr wird in einen Mauerdurchbruch eingesetzt und von Beton umgossen. Dabei wird es meist vor dem Vergießen des Betons an den Schalungstafeln, die die Mauerflächen begrenzen werden, befestigt. Nach dem Herstellen der Mauer ist das Rohr von Beton völlig umgeben, und somit fest in der Mauer eingegossen. Die Außenflächen der Flansche sind dabei im allgemeinen bündig mit den betreffenden Mauerflächen.

Auf jeden Flansch wird ein Deckel aufgesetzt. Der Deckel enthält Durchbrechungen, im allgemeinen durch Stutzen nach außen verlängert (der Mauer abgewandt), durch die die betreffenden Leitungen wie Kabel oder Rohrleitungen hindurchgeführt werden.

Dabei ist die Befestigung des Deckels am zugehörenden Flansch von je her ein Problem. Gemäß allgemeiner Gepflogenheit wird der Deckel mit einem Außengewinde versehen, und der Flansch mit einem Innengewinde, so daß diese beiden Elemente miteinander verschraubt werden können. Das Verschrauben ist jedoch äußerst problematisch. Bei Durchmessern der üblichen Größe ist das Aufschrauben des Deckels auf den Flansch schwierig und erfordert große Geschicklichkeit. Dabei besteht stets die Gefahr des Verkantens, wodurch die Gewindegänge beschädigt werden. Gelangt beim rauhen Baustellenbetrieb Schmutz in die Gewindegänge, so muß das Gewinde vor dem Aufschrauben gereinigt werden.

Der Erfindung liegt die Aufgabe zugrunde, eine Dichtpackung der eingangs genannten Art derart zu gestalten, daß zwischen Deckel und Flansch auf einfache Weise eine lösbare Verbindung herstellbar ist, und daß die beteiligten Elemente im Aufbau so einfach wie möglich sind, und daß die Dichtpackung kostengünstig herstellbar ist.

Diese Aufgabe wird durch die kennzeichnenden Merkmale von Anspruch 1 gelöst.

Die Erfindung ist anhand der Zeichnung näher erläutert.

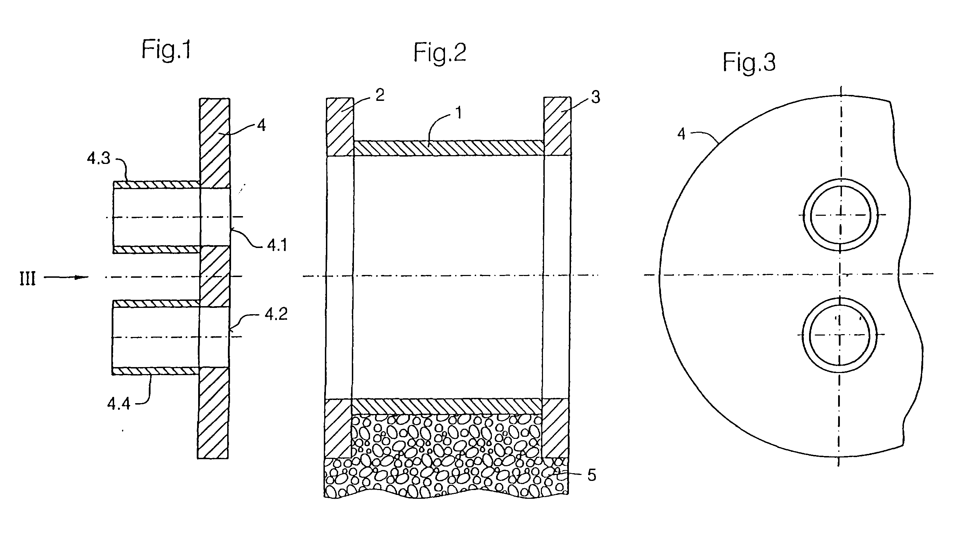

Die Figuren 1, 2 und 3 zeigen eine Dichtpackung in vereinfachter Darstellung. Dabei zeigt Fig. 2 die Dichtpackung in eingebautem Zustand, jedoch ohne die beiden Deckel. Man erkennt eine Rohrleitung 1, zwei Flansche 2, 3 sowie einen Deckel 4.

Rohr 1 mit den beiden Flanschen 2, 3 ist bereits in eine Betonwand 5 eingegossen. Die beiden Deckel, von denen nur der eine dargestellt ist, sind noch nicht aufgesetzt. Deckel 4 ist aus den Figuren 1 und 3 erkennbar. Fig. 1 zeigt Deckel 4 in einem Axialschnitt, während Fig. 3 den Deckel in einer Ansicht III darstellt. Deckel 4 weist Bohrungen 4.1, 4.2 auf, ferner hierzu koaxiale Stutzen 4.3 und 4.4. Statt zweier Bohrungen und zwei zugehörender Stutzen läßt sich jede beliebige andere Zahl von Bohrungen mit Stutzen vorsehen, je nach der Anzahl der Leitungen (Kabel oder Rohrleitungen), für welche die Dichtpackung bestimmt ist.

Alle dargestellten Teile sind beispielsweise im Spritzgußverfahren hergestellt und bestehen beispielsweise aus Kunststoff.

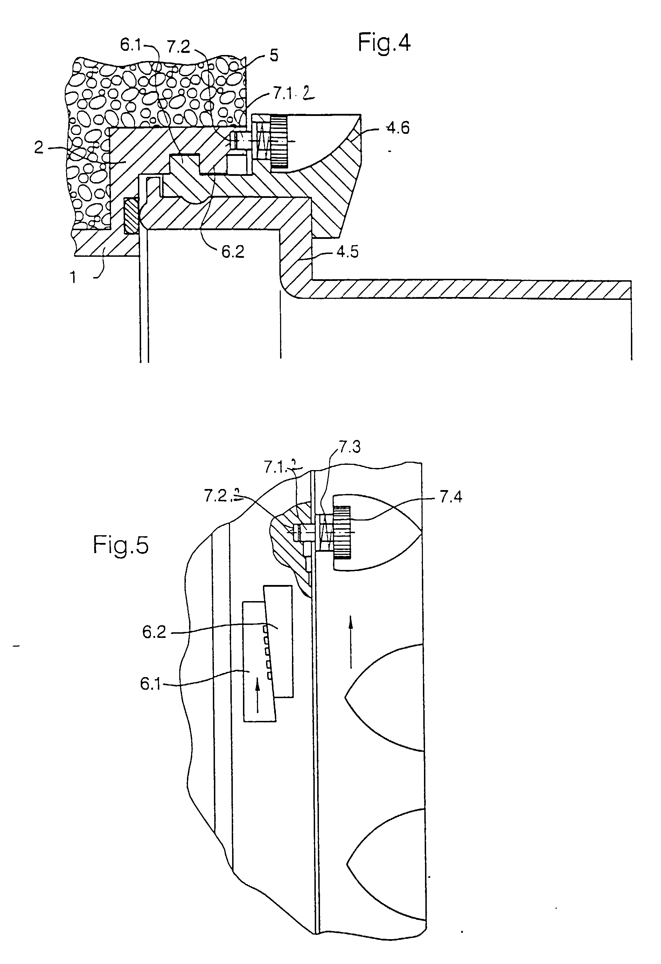

Jeder Flansch muß mit seinem zugehörenden Deckel derart verbunden werden, daß die Verbindung zum einen schnell und zuverlässig herstellbar ist, und daß sie zum anderen auch wieder lösbar ist. Gemäß der Erfindung wird die Verbindung zwischen Flansch und Deckel jeweils nach Art eines Bajonettverschlusses hergestellt; Flansche und Deckel werden demgemäß gestaltet. Dabei muß nicht unbedingt der Deckel selbst das betreffende Bajonettelement bilden, sondern man kann auch einen Ring vorsehen, der diese Funktion übernimmt. Eine solche Ausführung ist in den Figuren 4 und 5 wiedergegeben. Man erkennt dort einen Teil eines Rohres 1 mit einem Flansch 2. Diese beiden sind bereits in das Mauerwerk 5 aus Beton eingegossen. Der Deckel besteht in diesem Falle aus einem radial inneren Teil 4.5 sowie einem auf diesen aufgesetzten Deckelring 4.6.

Die Bajonettverbindung zwischen dem Flansch 2 und dem Deckelring 4.6 ist mittels Bajonettelementen herstellbar. Diese beiden Bajonettelemente sind einerseits ein Nocken 6.1, der dem Deckelring 4.6 angeformt ist, und andererseits ein Nocken 6.2, der dem Flansch 2 angeformt ist. Wie man aus Fig. 5 erkennt, weisen diese beiden Nocken 6.1 und 6.2 geneigte Flächen auf, die bei der Montage zum Anliegen gebracht werden. Dabei wird der Deckelring 4.6 derart verdreht, daß sein Nocken 6.1 in Richtung des Pfeiles wandert - siehe Fig. 5. Je größer der Verdrehwinkel ist, umso strammer ist die Bajonettverbindung.

Eine Besonderheit ist eine Arretiervorrichtung, die einen Stift 7.1.2 sowie eine Sicherungsbohrung 7.2.2 umfaßt. Dabei ist der Stift 7.1.2 dem Deckelring 4.6 zugeordnet, und die Sicherungsbohrung 7.2.2 dem Flansch 2. Wird beim Verdrehen des Deckelringes 4.6 ein bestimmter Drehwinkel erreicht, so schnappt der Sicherungsring 7.1 in die Sicherungsbohrung 7.2.2 ein, und zwar unter der Kraft einer Feder 7.3. Damit ist eine Arretierung vorgenommen. Die Arretierung kann jedoch wieder rückgängig gemacht werden, und zwar durch Herausziehen des Sicherungsstiftes 7.1.2 mittels des Rändelknopfes 7.4.

Eine besonders interessante Variante dieses Gedankens besteht darin, nicht nur eine einzige Sicherungsbohrung 7.2.2 vorzusehen, sondern eine Serie solcher Bohrungen. Diese sind in Fig. 5 erkennbar. Dabei sind die Bohrungen derart aneinandergereiht, daß auf eine erste Bohrung relativ geringer Tiefe eine zweite Bohrung etwas größerer Tiefe folgt, sodann eine dritte Bohrung, und schließlich die Endbohrung 7.2. Sicherungsstift 7.1.2 schnappt somit beim Verdrehen des Deckelringes 4.2 von einer Bohrung in die andere ein, wobei die Verriegelung stets eine zunehmend intensive ist. Ein Rück-Verdrehen ist unmöglich, es sei denn, man zieht den Sicherungsstift 7.1.2 heraus.

Es lassen sich Mittel vorsehen, mit denen der jeweilige Betriebszustand für den Benutzer erkennbar gemacht wird. So kann man beispielsweise dann ein akustisches oder optisches Signal erzeugen lassen, wenn sich Sicherungsstift 7.1.2 in Sicherungsbohrung 7.2.2 befindet, zum Zeichen dessen, daß der Bajonettverschluß einwandfrei hergestellt ist.

Normalerweise umfaßt eine Dichtpackung zwei Flansche und zwei Deckel. Es gibt jedoch auch Fälle, in denen nur ein einziger Flansch und demgemäß auch nur ein einziger Deckel vorgesehen sind.

Es versteht sich ferner, daß die Bajonettelemente 6.1, 6.2, die immer paarweise vorgesehen sind, über den Umfang mehrfach vorhanden sind. So sollten wenigstens zwei dieser Bajonettelemente vorhanden sein.

Die Intensität der Verspannung spielt eine große Rolle. Die Verbindung zwischen Deckel und Flansch kann gar nicht steif genug sein. Zu diesem Zwecke wird in weiterer Ausgestaltung der Erfindung noch durch eine Spannmutter ergänzt. Diese ist auf den äußersten Umfang des Deckels aufschraubbar. Falls der Deckel aus einem Grundkörper und einem Deckelring besteht, so wie in den Figuren 4 und 5 dargestellt, so ist die Spannmutter auf den Außenumfang des Deckelringes 4.6 aufzuschrauben. Nach dem Herstellen des Bajonettverschlusses mittels der Bajonettelemente 6.1, 6.2 wird die Spannmutter auf dem Deckelring 4.6 weiterverschraubt, und zwar in Richtung gegen den Flansch 2 bzw. gegen die betreffende Außenfläche des Mauerwerkes 5. Dieser weitere Gedanke ist hier nicht dargestellt.

Statt der Arretiervorrichtung aus Stift 7.1.2 und Sicherungsbohrung 7.2.2 kann auch vorgesehen werden, die Bajonettelemente in Umfangsrichtung anzuordnen und gegen Radialebenen geneigt zu gestalten, so daß hierdurch eine Arretierung erfolgt.

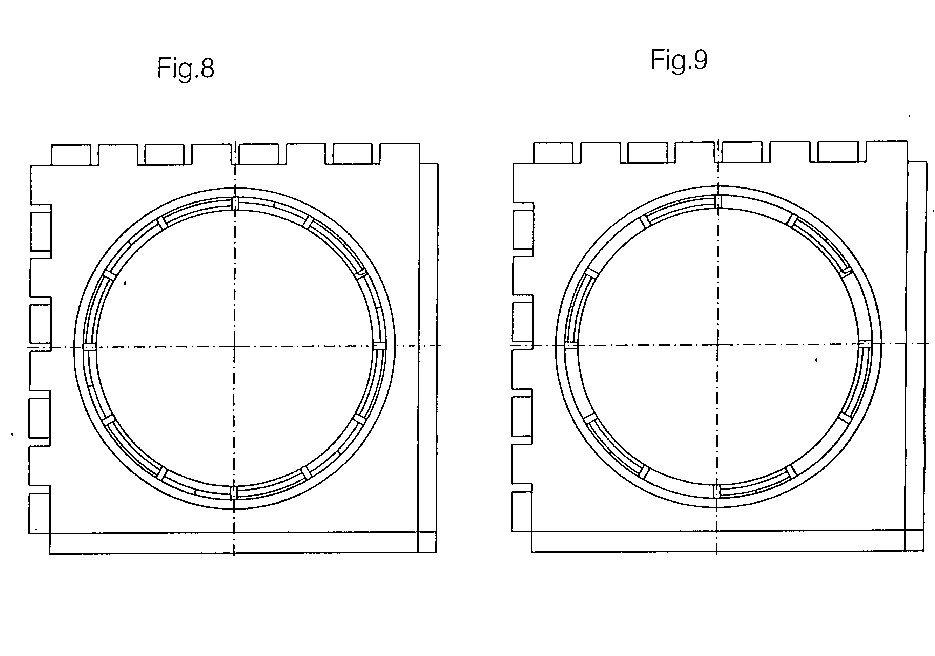

Die Figuren 6 bis 9 zeigen eine besondere Gestaltung des Bajonettverschlusses. Man erkennt an einem Rohrabschnitt 1 eine Mehrzahl von Fortsätzen 20, die dem Rohrabschnitt 1 angeformt sind. Die Fortsätze 20 sind elastisch. Sie weisen Bajonettelemente 21 auf, ferner Aussparungen 22. Hiermit ist ein Steck-Schnappverschluß herstellbar.

Die Figuren 8 und 9 zeigen zwei verschiedene Zustände. Bei Figur 9 ist der Steck-Schnappverschluß noch nicht arretiert, während die beiden miteinander zu verbindenden Bauteile bei Figur 9 relativ zueinander derart verdreht sind, daß ein Arretieren erfolgt ist.

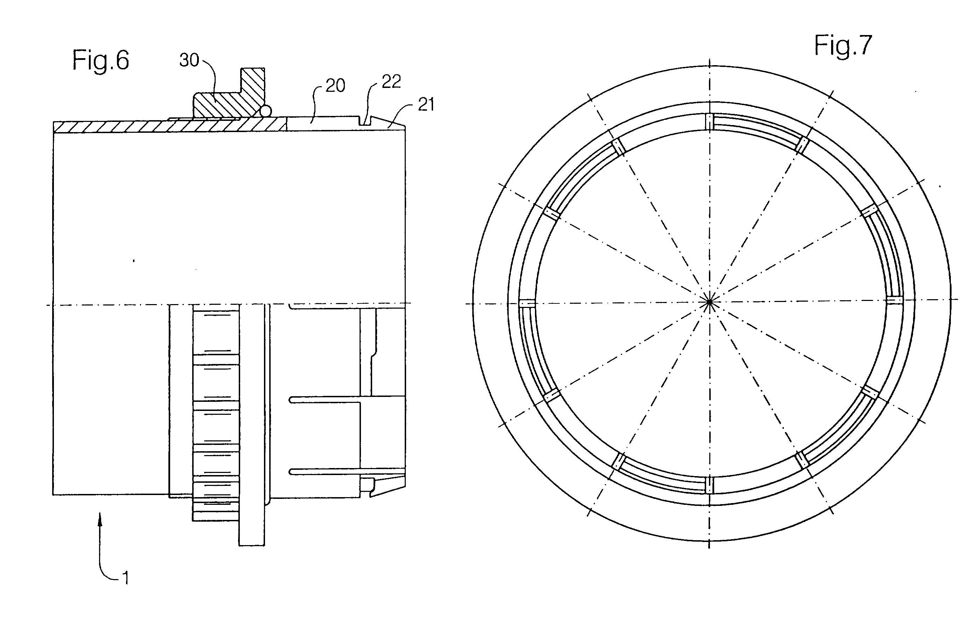

Aus Figur 6 erkennt man ferner einen Spannring 30.

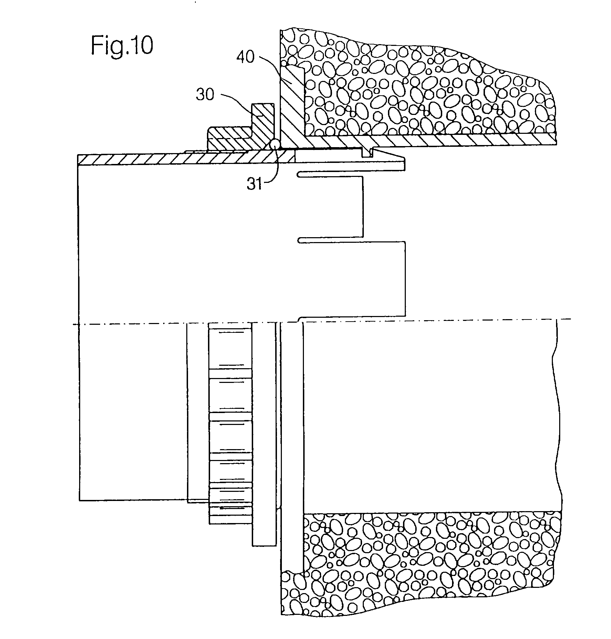

Figur 10 zeigt die genannten Gegenstände zum Herstellen eines Steck- und Schnappverschlusses. Die Spannmutter 30 läßt sich zur Vergrößerung der Steifigkeit der Verbindung gegen einen Flansch 40 festschrauben. Zwischen Spannmutter 30 und Flansch 40 befindet sich ein O-Ring 31.

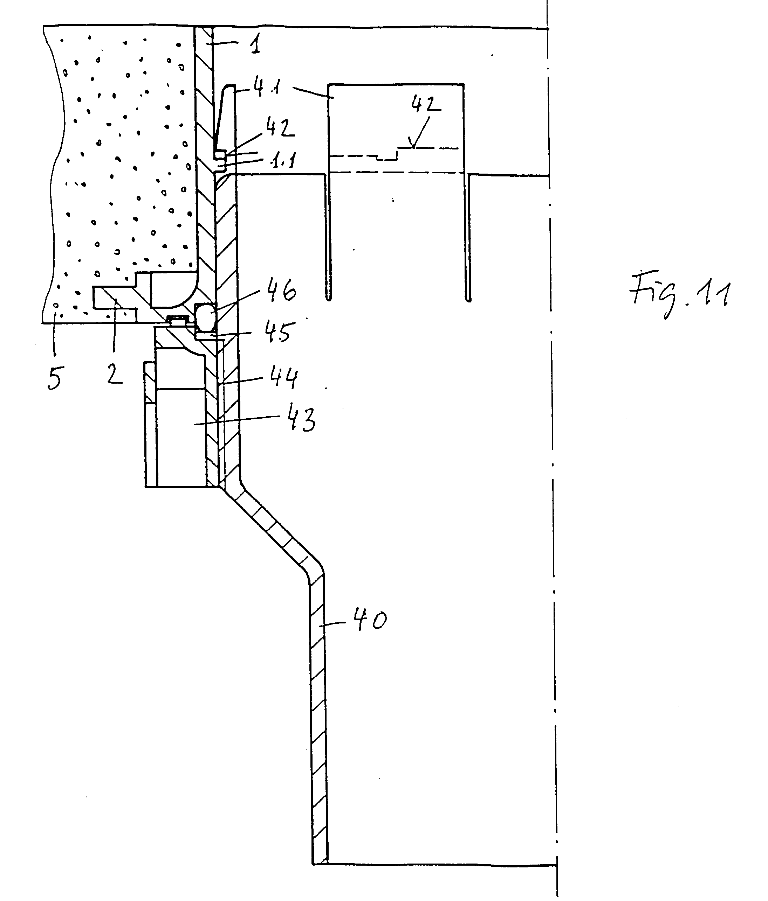

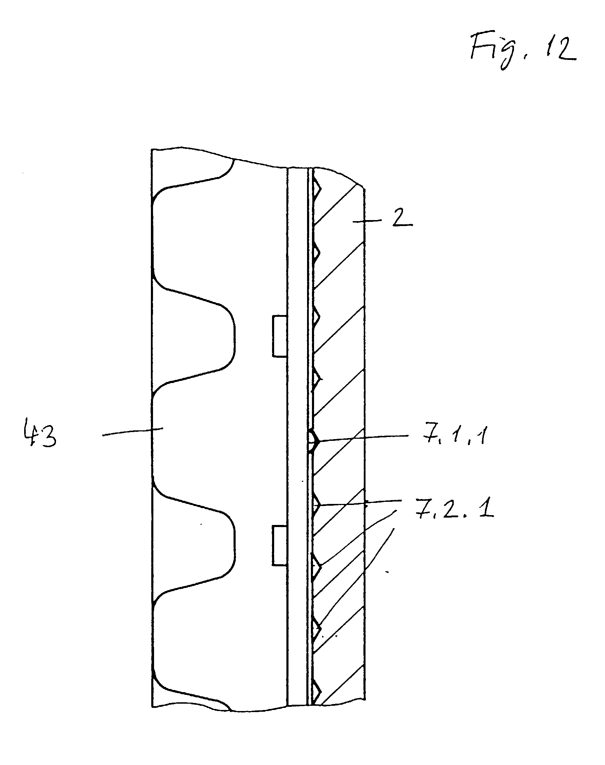

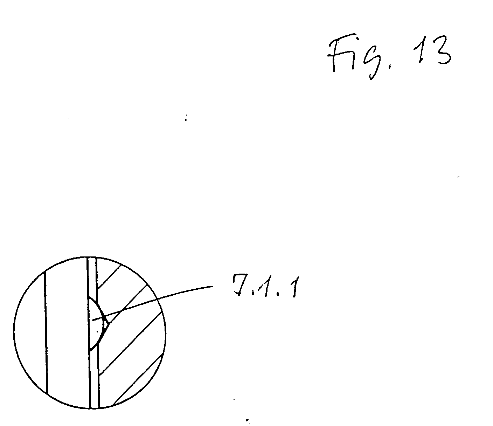

Die Figuren 11 bis 13 zeigen eine besonders interessante Variante der Erfindung.

Aus Figur 11 erkennt man eine Mauer 5. In diese Mauer ist ein Rohr 1 eingesetzt. Am einen Ende des Rohres 1 befindet sich ein Flansch 2. Ein Anschlußrohr 40 weist einen Endbereich auf, der eine Mehrzahl von Zungen 41 umfaßt. Jede Zunge weist eine Aussparung 42 auf, in welche ein Zapfen 1.1 des Rohres 1 eingreift. Man beachte die Kontur der Aussparung 42.

Auf das Anschlußrohr ist eine Spannmutter 43 aufgeschraubt - siehe Gewinde 44. Zwischen Spannmutter 43 und Flansch 2 befindet sich ein Stützring 45 sowie O-Ring 46.

Die Spannmutter 43 weist einen Nocken 7.1.1, während der Flansch 2 eine Mehrzahl von Sicken 7.2.1 aufweist.

Die Arbeitsweise der gesamten Vorrichtung ist wie folgt:
Zunächst wird das Anschlußrohr 40 mit seinem Endbereich in das Rohr 1 eingeschoben, wobei durch entsprechendes Verdrehen ein Einrasten der Bajonettelemente 1.1 und 42 erfolgt. Nunmehr kann die Spannmutter 43 durch Verdrehen auf dem Gewinde 44 angezogen werden, wobei sie sich pressend gegen den Flansch 2 anlegt. Der Nocken 7.1.1 greift dabei beim Verdrehen nacheinander in einander benachbarte Sicken ein, womit eine gewisse Verriegelung erfolgt. Das Verspannen der Spannmutter läßt sich nur um ein bestimmtes Maß bewirken. Das beim Verdrehen auftretende Klack-Geräusch zeigt der Bedienungsperson jeweils an, daß der Nocken in eine Sicke eingerastet ist.

Der Sinn dieser Vorrichtung besteht in folgendem:
Der Endbereich des Anschlußrohres 40 ist durch die Aussparungen 42 in den Zungen 41 geschwächt. Überschreitet die Zugspannung einen gewissen Wert, so bestünde die Gefahr des Abreißens der Zungen. Diese Gefahr ist aber im vorliegendem Falle nicht gegeben, da da das weitere Anziehen und Zusammenpressen zwischen Spannmutter 43 und Flansch 2 erfolgt.

Die Kontur der Aussparung 42 in einer jeden Zunge 41 ist besonders vorteilhaft, weil nämlich hierdurch ein unbeabsichtigtes Zurückverdrehen und damit ein Auseinanderfallen der Verbindung vermieden wird.

Das Gewinde 44 zwischen Spannmutter 43 und Anschlußrohr 40 ist einer besonderen Weise gestaltet: Der letzte Gang des Gewindes oder die letzten Gänge - in Aufschraubrichtung gesehen - sind derart gestaltet, daß zwangsläufig eine Verdrehung in Schließrichtung erfolgt. Dies kann beispielsweise dadurch geschehen, daß die letzten Gänge dieser Spannmutter 53 im Durchmesser etwas größer sind, als die vorausgegangenen Gänge. Hierdurch wird ein Verdrehen in Einschnapprichtung bewirkt.

## Patentansprüche

1. Dichtpackung zum Einsetzen in eine Maueröffnung zwecks Hindurchführens von Leitungen wie Kabeln, Rohrleitungen;
1.1 mit einem die Leitungen aufnehmenden Rohr (1);
1.2 wenigstens einem Ende des Rohres (1) ist ein Flansch (2) zugeordnet;
1.3 mit einem Deckel (4, 4.5, 4.6), der mit dem Flansch (2) in lösbarer Weise verbindbar ist, und der Öffnungen (4.1, 4.2) zum Hindurchführen der Leitungen aufweist;
gekennzeichnet durch die folgenden Merkmale:
1.4 Deckel (4, 4.5, 4.6) und Flansch (2) sind nach Art eines Bajonettverschlusses miteinander verbindbar;
1.5 eines der beiden Elemente - Deckel (4, 4.5, 4.6) oder Flansch (2) - trägt an seinem Umfang Vorsprünge (7.1);
1.6. das andere der beiden Elemente weist Aussparungen (7.2) auf, in die die Vorsprünge (7.1) einrasten können.

2. Dichtpackung nach Anspruch 1, dadurch gekennzeichnet, dass die Vorsprünge als Nocken (7.1.1), und die Aussparungen als Sicken (7.2.1) ausgeführt sind.

3. Dichtpackung nach einem der Ansprüche 1 oder 2, dadurch gekennzeichnet, dass die Vorsprünge wenigstens einen Stift (7.1.2) umfassen, der vorzugsweise elastisch gegen das andere Element andrückbar ist, und dass die Aussparungen aus Vertiefungen (7.2.2) bestehen, die derart gestaltet und angeordnet sind, dass der Stift (7.1.2) bei einem bestimmten Verspannungszustand des Bajonettverschlusses (Verdrehwinkel von Deckel und Flansch) in die Vertiefungen (7.2.2) einschnappen kann.

4. Dichtpackung nach Anspruch 3, dadurch gekennzeichnet, dass die Vertiefungen in Drehrichtung gesehen an Tiefe zunehmen.

5. Dichtpackung nach einem der Ansprüche 1 bis 4, gekennzeichnet durch die folgenden Merkmale:
5.1 der Deckel umfasst ein radial inneres Hauptteil (4.5) sowie einen diesen umschließenden Ring (4.6);
5.2 der Ring (4.6) weist die Bajonettelemente (6.1) auf.

6. Dichtpackung nach einem der Ansprüche 1 bis 5, gekennzeichnet durch die folgenden Merkmale:
6.1 der Deckel bzw. der Deckelring (4.6) weist an seinem Außenumfang ein Außengewinde auf;
6.2 auf das Außengewinde ist eine Spannmutter aufgeschraubt, die nach dem Herstellen einer Verbindung zwischen Steigerung der Verspannung gegen den Flansch (2) bzw. gegen die betreffende Fläche des Mauerwerks (5) verschraubbar ist, so dass die Mutter mit ihrer Stirnfläche am Flansch (2) bzw. an der Außenfläche des Mauerwerkes (5) anliegt.

7. Dichtpackung zum Einsetzen in eine Maueröffnung zwecks Hindurchführens von Leitungen wie Kabeln, Rohrleitungen;
7.1 mit einem die Leitungen aufnehmenden Rohr (1);
7.2 wenigstens einem Ende des Rohrs (1) ist ein Flansch (2) zugeordnet;
7.3 mit einem Anschlussrohr (40), der mit seinem Endbereich in das Rohr (1) einführbar ist;
7.4 der Endbereich des Anschlussrohres (40) ist aus einer Mehrzahl von Zungen (41) gebildet;
7.5. zum Erzielen eines Bajonetteffektes ist das Rohr (1) mit Nocken (1.1), und sind die Zungen (41) mit Aussparungen (42) ausgestattet.

8. Dichtpackung nach Anspruch 7, dadurch gekennzeichnet, dass die Kontur der Aussparung (42) in einer jeden Zunge (41) derart gestaltet ist, dass ein unbeabsichtigtes Zurückverdrehen und damit ein Auseinanderfallen der Verbindung vermieden wird.

## Claims

1. Sealing for setting into a wall opening for the purpose of leading through lines such as cables and conduits;
1.1 having a pipe (1) accommodating the lines;
1.2 a flange (2) is assigned to at least one end of the pipe (1);
1.3 with a cover (4, 4.5, 4.6) which can be connected detachably to the flange (2) and which presents openings (4.1, 4.2) for leading through the lines, characterised by the following features
1.4 cover (4, 4.5, 4.6) and flange (2) can be connected to one another in the manner of a bayonet socket;
1.5 one of the two elements of cover (4, 4.5, 4.6) or flange (2) bears bosses (7.1) on its periphery;
1.6 the other of the two elements presents recesses (7.2) in which the bosses (7.1) engage.

2. Sealing as claimed in Claim 1, characterised in that the bosses are designed as cams (7.1.1) and the recesses are designed as beads (7.2.1).

3. Sealing as claimed in any one of Claims 1 or 2, characterised in that the bosses include at least one pin (7.1.2) which can be pressed preferably elastically against the other element, and in that the recesses comprise indentations (7.2.2), which is designed and arranged such that the pin (7.1.2) can snap into the indentations (7.2.2) when the bayonet socket (angle of torsion of cover and flange) is in a specific bracing state.

4. Sealing as claimed in Claim 3, characterised in that the recesses increase in depth viewed in the direction of rotation.

5. Sealing as claimed in any one of Claims 1 to 4, characterised by the following features:
5.1 the cover includes a radially internal principal component (4.5) as well as a ring (4.6) enclosing it;
5.2 the ring (4.6) presents the bayonet socket (6.1).

6. Sealing as claimed in any one of Claims 1 to 5, characterised by the following features:
6.1 the cover or the cover ring (4.6) presents an external thread on its outer circumference;
6.2 screwed onto the external thread is an adjusting nut which can be screwed down or up after a connection is established between increase of bracing against the flange (2) or against the relevant surface of the wall (5), such that the nut rests with its front face on the flange (2) or on the outer surface of the wall (5).

7. Sealing for setting into a wall opening for the purpose of leading through lines such as cables and conduits;
7.1 having a pipe (1) accommodating the lines;
7.2 a flange (2) is assigned to at least one end of the pipe (1);
7.3 having a connection pipe (40) the end region of which can be guided into the pipe (1);
7.4 the end region of the connection pipe (40) is formed from a plurality of tongues (41);
7.5 to achieve a bayonet effect the pipe (1) is fitted with cams (1.1) and the tongues (41) are fitted with recesses.

8. Sealing as claimed in Claim 7, characterised in that the contour of the recess (42) in each tongue (41) is shaped such that unintentional twisting and collapsing of the connection are accordingly prevented.

## Revendications

1. Garniture d'étanchéité destinée à être introduite dans une ouverture de maçonnerie en vue du passage de conduites telles que des câbles ou des tuyauteries,
1.1 avec un tuyau (1) destiné à recevoir les conduites,
1.2 une bride (2) étant associée à une extrémité du tuyau (1) au moins,
1.3 avec un couvercle (4, 4.5, 4.6) qui peut être relié à la bride (2) de manière amovible et qui présente des ouvertures (4.1, 4.2) pour le passage des conduites,
caractérisée en ce que :
1.4 le couvercle (4, 4.5, 4.6) et la bride (2) peuvent être reliés l'un à l'autre par un raccord à baïonnette ;
1.5 l'un des deux éléments (le couvercle (4, 4.5, 4.6) ou la bride (2)) porte des saillies (7.1) sur sa circonférence ;
1.6 l'autre des deux éléments présente des évidements (7.2) dans lequel les saillies (7.1) peuvent s'engager.

2. Garniture d'étanchéité selon la revendication 1, caractérisée en ce que les saillies sont conçues comme des cames (7.1.1) et les évidements comme des gorges (7.2.1).

3. Garniture d'étanchéité selon l'une quelconque des revendications 1 ou 2, caractérisée en ce que les saillies comprennent au moins une goupille (7.1.2) qui peut de préférence être appuyée de manière élastique contre l'autre élément, et en ce que les évidements se composent de creux (7.2.2) conformés et disposés de telle sorte que la goupille (7.1.2) puisse se détendre dans les creux (7.2.2) dans un état de serrage donné du raccord à baïonnette (angle de rotation du couvercle et de la bride).

4. Garniture d'étanchéité selon la revendication 3, caractérisée en ce que la profondeur des creux augmente dans le sens de la rotation.

5. Garniture d'étanchéité selon l'une quelconque des revendications 1 à 4, caractérisée en ce que :
5.1 le couvercle comprend une partie principale (4.5) intérieure dans le sens radial et un anneau (4.6) entourant celle-ci ;
5.2 l'anneau (4.6) porte les éléments du raccord à baïonnette (6.1).

6. Garniture d'étanchéité selon l'une quelconque des revendications 1 à 5, caractérisée en ce que :
6.1 le couvercle ou l'anneau du couvercle (4.6) présente sur sa circonférence extérieure un filetage externe ;
6.2 le filetage externe porte vissé un écrou de serrage qui peut être vissé contre la bride (2) ou contre la surface de maçonnerie (5) concernée après l'établissement de la liaison en vue d'accroître le serrage, de telle sorte que la face de l'écrou repose sur la bride (2) ou sur la surface extérieure de la maçonnerie (5).

7. Garniture d'étanchéité destinée à être introduite dans une ouverture de maçonnerie en vue du passage de conduites telles que des câbles ou des tuyauteries,
7.1 avec un tuyau (1) destiné à recevoir les conduites,
7.2 une bride (2) étant associée à au moins une extrémité du tuyau (1),
7.3 avec un tube de raccordement (40) dont l'extrémité peut être introduite dans le tuyau (1) ;
7.4 l'extrémité du tube de raccordement (40) étant formée d'une pluralité de languettes (41) ;
7.5 le tuyau (1) étant doté de cames (1.1) et les languettes (41) d'évidements (42), afin d'obtenir un effet de baïonnette.

8. Garniture d'étanchéité selon la revendication 7, caractérisée en ce que le contour de l'évidement (42) de chaque languette (41) est conformé de telle sorte qu'il évite un desserrement accidentel et la suppression du raccordement.
